# EUROPEAN PATENT SPECIFICATION

(11) **EP 3 413 055 B1**
(45) Date of publication and mention of the grant of the patent: **06.10.2021**
(21) Application number: 17175340.3
(22) Date of filing: 09.06.2017
(51) Int. Cl.: G01N 35/04, G01N 35/00, B67B 3/26, G01N 21/90

(54) **METHOD FOR DETECTING A COVERING STATE AND LABORATORY SAMPLE DISTRIBUTION SYSTEM**
VERFAHREN ZUR ERKENNUNG EINES ABDECKUNGSZUSTANDS UND LABORPROBENVERTEILUNGSSYSTEM
PROCÉDÉ DE DÉTECTION D'UN ÉTAT DE COUVERTURE ET SYSTÈME DE DISTRIBUTION D'ÉCHANTILLONS DE LABORATOIRE

(43) Date of publication of application: 12.12.2018
(73) Proprietor: Roche Diagnostics GmbH, 68305 Mannheim (DE); F. Hoffmann-La Roche AG, 4070 Basel (CH)
(72) Inventor: Bäumlisberger, Tim, 71638 Ludwigsburg (DE)
(74) Representative: Patentanwälte Ruff, Wilhelm, Beier, Dauster & Partner mbB

(56) References cited:
- CN-B- 102 486 824
- JP-A- H09 169 392
- JP-B2- 3 203 773
- US-A- 5 171 979
- US-A1- 2013 017 595

## Description

The invention relates to a method for detecting a covering state of a laboratory sample container and to a corresponding laboratory sample distribution system.

Laboratory sample distribution systems are typically used in order to distribute a large number of sample containers with respective samples between laboratory stations. Such laboratory stations can, for example, be used in order to determine if certain analytes are present in samples, and in which concentration.

Sample containers may be covered for example with respective foils. While most sample containers may typically be covered with a respective foil during transport in order to avoid spilling of samples, it may occur that a part of the sample containers is not sealed correctly by the foils. This can lead to spilling of samples and contamination of other samples or of the whole system.

US 2013/0017595 A1 and US 5 171 979 A respectively disclose methods for detecting a covering state of a laboratory sample container, wherein the covering state is determined based on transversal light.

JP H09 169392 A discloses a capping state tester using a laser radiating source radiating laser light from a shoulder part of a beverage filled container. A camera takes an image of the diffused light to obtain a geometric characteristic amount of the image.

### Object and solution

It is thus an object of the present invention to provide for a method for detecting a covering state of a laboratory sample container that allows for a reliable detection of the covering state. It is a further object of the present invention to provide for a corresponding laboratory sample distribution system.

This object is solved by a method according to claim 1 and a laboratory sample distribution system according to claim 7.

The invention relates to a method for detecting a covering state of a laboratory sample container. A covering state may be a state relating to a foil or other cover or covering means being either present or non-present on an orifice of the sample container. In addition, a covering state may denote a covering degree of the orifice by the foil or other cover or covering means. E.g., it may be detected if the orifice is fully covered, partially covered or not covered by the foil or other cover or covering means.

The laboratory sample container is at least partially light conducting. The laboratory sample container has an orifice being coverable by a dedicated cover.

The method comprises the following steps:
- injecting light into the laboratory sample container,
- measuring an optical power of light at a measuring location, wherein the measuring location is chosen such that the measured optical power depends on the optical power of the light injected into the laboratory sample container and depends on the covering state, and
- detecting a (fully) covered state, a partially covered stated or a non-covered state of the laboratory sample container depending on the measured optical power.

By means of the inventive method, a covering state can be reliably detected without the need to use complex technology. It is not necessary to use image recognition or manual intervention in order to determine if a sample container is correctly covered. It is sufficient to inject light into the sample container and to measure a resulting light intensity in order to determine if a cover is placed in the path of the light.

The light is injected into the laboratory sample container at a longitudinal end opposite to the orifice, such that the light is conducted along a longitudinal extension of the sample container and leaves the sample container at the orifice.

The light may be injected into the laboratory sample container at a support holding the laboratory sample container.

According to an embodiment, the light is injected into the laboratory sample container using a wave-guiding element. This allows for using a light source being distant to the sample container, wherein the light is conducted using the wave-guiding element. For example, an optical fiber, e.g. a glass fiber, can be used.

According to an embodiment, the optical power is measured using a sensing means positioned at the measuring location besides the orifice, such that the sensing means is illuminated by light that has been injected into the laboratory sample container and is coupled out from the laboratory sample container if the orifice is not covered or only partially covered by a cover. Such sensing means may, for example, be embodied as a photo detector. The determination if a sample container is fully covered or not may especially be made using a comparison of the measured optical power with a given or known threshold value.

According to an embodiment, the light is coupled out from the laboratory sample container in a region of the laboratory sample container forming the orifice. Light is typically prevented from being coupled out by a cover, if the cover correctly covers the orifice.

According to an embodiment, the measured optical power of light at the measuring location is normalized by means of a normalizing value, wherein the normalizing value is a measured optical power in the non-covered state of the laboratory sample container, wherein the covered state, the partially covered state or the non-covered state is detected depending on the normalized measured optical power. This allows for a simple and suitable reference for determining the covering state.

The invention relates further to a laboratory sample distribution system being adapted to perform the inventive method. With regard to the method, all embodiments and variations as disclosed herein can be applied.

The laboratory sample distribution system comprises a light emitting means, e.g. an LED, being adapted to inject light into a laboratory sample container.

The laboratory sample distribution system further comprises a sensing means positioned at a measuring location and being configured to measure an optical power of light at the measuring location.

The laboratory sample distribution system further comprises a control device being adapted to detect a covered state, a partially covered state or a non-covered state of the laboratory sample container depending on the measured optical power.

By means of the inventive laboratory sample distribution system, the inventive method can be suitably performed. E.g. a plurality of sample containers can be easily checked regarding their covering state

According to an embodiment, the control device is configured to influence or suspend further processing of a laboratory sample container depending on the covering state of the sample container. This can, for example, prevent the laboratory sample container not correctly covered by a cover from entering transport systems or regions where spilling could occur. The control device may be configured to transport such a sample container securely to a capping station in order to provide for a suitable cover of the laboratory sample container.

According to an embodiment, the laboratory sample distribution system comprises a transport device for transporting a plurality of laboratory sample containers, wherein the transport device comprises a number of support elements each having a respective opening for receiving a respective laboratory sample container, wherein the light emitting means is arranged at a position alongside the transport device to inject the light into a laboratory sample container received in a support element.

Such a transport device may be used in order to transport the sample containers between stations or for other purposes, wherein the detection of the covering state can be made alongside a transport path.

According to an embodiment, the transport device is a conveyor belt or conveyor chain.

### Short description of the drawings

The invention will now be described with respect to the attached drawings. In the drawings,
- Fig. 1: shows a part of a laboratory sample distribution system according to a first embodiment, and
- Fig. 2: shows a part of a laboratory sample distribution system according to a second embodiment.

### Detailed description of the embodiments

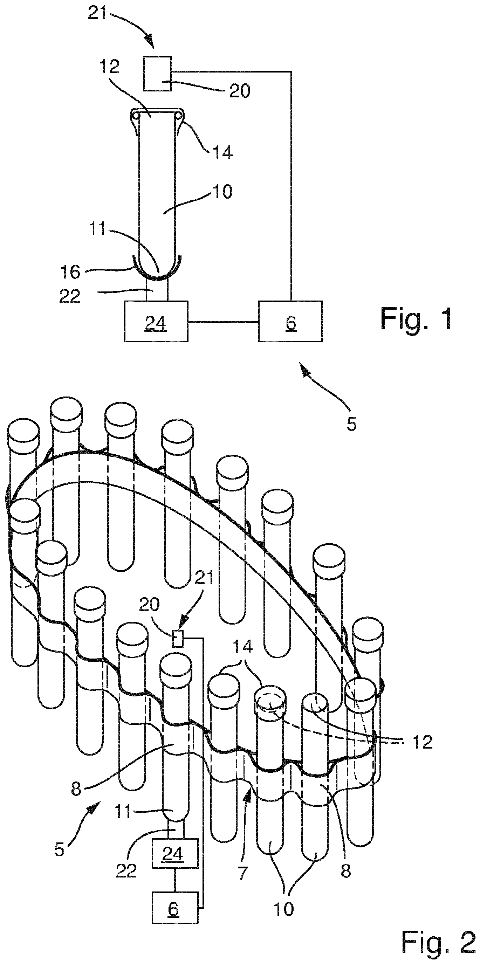

Fig. 1 shows a part of a laboratory sample distribution system 5 according to a first embodiment of the invention. The laboratory sample distribution system 5 is adapted to perform a method according to the invention.

The laboratory sample distribution system 5 comprises a support 16 for holding a sample container 10. The sample container 10 may be filled with a sample that is to be analyzed by analyzing stations that are not shown in the figures. The sample is also not shown.

The sample container 10 has a lower end 11 and an orifice 12. The lower end 11 and the orifice 12 are positioned at opposing longitudinal ends of the sample container 10.

The orifice 12 is covered by a cover 14. The cover 14 is embodied as a foil.

Below the support 16, the laboratory sample distribution system 5 comprises a light emitting means 24 being embodied as a suitable light emitting device, e.g. a LED. Between the light emitting means 24 and the support 16, a wave-guiding element 22 is arranged. By means of the shown arrangement, light emitted from the light emitting means 24 is guided to the support 16 and is coupled into the bottom end of the sample container 10.

The sample container 10 is made of material being transparent for the light emitted by the light emitting means 24. The material may be glass or transparent plastic. Thus, the light coupled in at bottom or lower end 11 of the sample container 10 is guided inside the sample container 10 towards the orifice 12.

Just above the orifice 12 a sensing means 20 is positioned at a measuring location 21. The sensing means 20 is embodied as a conventional light detector.

The sensing means 20 is coupled to a control device 6, which is also coupled to the light emitting means 24. The control device 6 may e.g. be embodied as a microcontroller.

If a covering state of a sample container 10 is to be determined, i.e. it is to be determined if the sample container 10 is in fact covered by the depicted cover 14, the control device 6 activates the light emitting means 24 such that light is emitted and coupled into the sample container 10. Then, an optical power is detected using the sensing means 20.

If the optical power is below a predefined threshold, it is determined that the sample container 10 is covered, because the cover 14 prevents the light from being emitted out of the sample container 10 at the orifice 12 towards the sensing means 20. If the measured power is above the predefined threshold, it is determined that the sample container 10 is not correctly covered, because light is emitted freely at the orifice 12. It should be noted that also different thresholds can be used for determining a fully covered state, a partially covered state or non-covered state, and that an undefined state may be determined if the optical power is between these thresholds. The threshold(s) may e.g. be determined empirically, e.g. by measuring the optical power in the covered state, in a defined partially covered state and in the non-covered state. This may e.g. be done for different sample containers and/or different sample container materials.

The measured optical power of light at the measuring location 21 may be normalized by means of a normalizing value, wherein the normalizing value is a measured optical power in the non-covered state of the laboratory sample container 10, wherein the covered state, the partially covered state or the non-covered state is detected depending on the normalized measured optical power.

This provides for a very easy and reliable determination of a covering state of the sample container 10.

Fig. 2 shows a part of a laboratory sample distribution system 5 according to a second embodiment of the invention.

The laboratory sample distribution system 5 comprises a transport device in the form of a conventional conveyor belt 7. The conveyor belt 7 comprises a plurality of support elements 8, wherein each support element 8 is embodied for holding a respective sample container 10. The conveyor belt 7 is embodied to transport the sample containers 10 comprised in its support elements 8 along a given circular path.

At the depicted position along the path formed by the conveyor belt 7 means for detecting a covering state of the respective sample container 10 are arranged. Such means are embodied basically similar to fig. 1, wherein the support 16 is omitted, since the sample container 10 is held by a corresponding support element 8 of the conveyor belt 7. Reference is made to the above description of fig. 1 regarding the remaining elements.

The covering state of the sample containers 10 being conveyed by means of the conveyor belt 7 may be determined on the flight, i.e. during the conveying process. If a sample container 10 reaches the dedicated position light is emitted from the light emitting means 24. The light is guided using the wave-guiding elements 22 and is coupled into the sample container 10 at its lower end 11. An optical power is measured using the sensing means 20 at the measuring location 21 just above the orifice 12 of the sample container 10. The control device 6 is configured to determine the covering state of the sample container 10 just as described with respect to fig. 1.

As shown in the example of fig. 2 only one sample container 10 is not covered by a cover 14. If the sample container 10 not covered by a cover 14 will be checked for its covering state, light can be emitted freely around its orifice 12. Thus, according to the principle described above, it will be detected as being in a non-covered or partially covered state. For example, further operation with this sample container can be prevented or otherwise corrected until it is covered correctly.

The described operation of the embodiments corresponds to an exemplary embodiment of the inventive method.

## Claims

1. Method for detecting a covering state of a laboratory sample container (10), wherein the laboratory sample container (10) is at least partially light conducting and wherein the laboratory sample container (10) has an orifice (12) being coverable by a dedicated cover (14), wherein the method comprises the steps:
- injecting light into the laboratory sample container (10),
- measuring an optical power of light at a measuring location (21), wherein the measuring location (21) is chosen such that the measured optical power depends on the optical power of the light injected into the laboratory sample container (10) and depends on the covering state, and
- detecting a covered state, a partially covered state and/or a non-covered state of the laboratory sample container (10) depending on the measured optical power,
**characterized in that**
- the light is injected into the laboratory sample container (10) at a longitudinal end (11) opposite to the orifice (12).

2. Method according to claim 1, **characterized in that**
- the light is injected into the laboratory sample container (10) at a support (16) holding the laboratory sample container (10).

3. Method according to one of the preceding claims, **characterized in that**
- the light is injected into the laboratory sample container (10) using a wave-guiding element (22).

4. Method according to one of the preceding claims, **characterized in that**
- the optical power is measured using a sensing means (20) positioned at the measuring location (21) besides the orifice (12), such that the sensing means (20) is illuminated by light that has been injected into the laboratory sample container (10) and is coupled out from the laboratory sample container (10), if the orifice (12) is not covered or partially covered by the cover (14).

5. Method according to claim 4, **characterized in that**
- the light is coupled out from the laboratory sample container (10) in a region of the laboratory sample container (10) forming the orifice (12).

6. Method according to one of the preceding claims, **characterized in that**
- the measured optical power of light at the measuring location (21) is normalized by means of a normalizing value, wherein the normalizing value is a measured optical power in the non-covered state of the laboratory sample container (10), wherein the covered state, the partially covered state and/or the non-covered state is detected depending on the normalized measured optical power.

7. Laboratory sample distribution system (5) for performing the method of one of the preceding claims, comprising
- a light emitting means (24) being adapted to inject light into a laboratory sample container (10) at a longitudinal end (11) opposite to an orifice (12) of the laboratory sample container (10),
- a sensing means (20) positioned at a measuring location (21) and being configured to measure an optical power of light at the measuring location (21), wherein the measuring location (21) is chosen such that the measured optical power depends on the optical power of the light injected into the laboratory sample container (10) and depends on the covering state, and
- a control device (6) being adapted to detect a covered state, a partially covered state and/or a non-covered state of the laboratory sample container (10) depending on the measured optical power.

8. Laboratory sample distribution system (5) according to claim 7, **characterized in that**
- the control device (6) is configured to influence further processing of a laboratory sample container (10), if a non-covered state or a partially covered state of the laboratory sample container (10) is detected.

9. Laboratory sample distribution system (5) according to claim 7 or 8, further comprising:
- a transport device (7) for transporting a plurality of laboratory sample containers (10), wherein the transport device (7) comprises a number of support elements (8) each having a respective opening for receiving a respective laboratory sample container (10), wherein the light emitting means (24) is arranged at a position alongside the transport device (7) to inject the light into a laboratory sample container (10) received in a support element (8).

10. Laboratory sample distribution system (5) according to claim 9, **characterized in that**
- the transport device (7) is a conveyor belt.

## Patentansprüche

1. Verfahren zum Erkennen eines Abdeckungszustands eines Laborprobenbehälters (10), wobei der Laborprobenbehälter (10) zumindest teilweise lichtleitend ist und wobei der Laborprobenbehälter (10) eine Öffnung (12) aufweist, die mit einer zugeordneten Abdeckung (14) abgedeckt werden kann, wobei das Verfahren die folgenden Schritte umfasst:
- Einleiten von Licht in den Laborprobenbehälter (10),
- Messen einer Lichtleistung von Licht an einer Messstelle (21), wobei die Messstelle (21) so gewählt wird, dass die gemessene Lichtleistung von der Lichtleistung des in den Laborprobenbehälter (10) eingeleiteten Lichts abhängt und von dem Abdeckungszustand abhängt, und
- Erkennen eines abgedeckten Zustands, eines teilweise abgedeckten Zustands und/oder eines nicht abgedeckten Zustands des Laborprobenbehälters (10) in Abhängigkeit von der gemessenen Lichtleistung,
**dadurch gekennzeichnet, dass**
- das Licht an einem Längsende (11) gegenüber der Öffnung (12) in den Laborprobenbehälter (10) eingeleitet wird.

2. Verfahren nach Anspruch 1, **dadurch gekennzeichnet, dass**
- das Licht an einem Träger (16), der den Laborprobenbehälter (10) hält, in den Laborprobenbehälter (10) eingeleitet wird.

3. Verfahren nach einem der vorstehenden Ansprüche, **dadurch gekennzeichnet, dass**
- das Licht unter Verwendung eines Wellenleitungselements (22) in den Laborprobenbehälter (10) eingeleitet wird.

4. Verfahren nach einem der vorstehenden Ansprüche, **dadurch gekennzeichnet, dass**
- die Lichtleistung unter Verwendung einer Erfassungseinrichtung (20) gemessen wird, die an der Messstelle (21) neben der Öffnung (12) positioniert ist, so dass die Erfassungseinrichtung (20) mit Licht beleuchtet wird, das in den Laborprobenbehälter (10) eingeleitet wurde, und aus dem Laborprobenbehälter (10) ausgekoppelt wird, wenn die Öffnung (12) nicht abgedeckt oder teilweise mit der Abdeckung (14) abgedeckt ist.

5. Verfahren nach Anspruch 4, **dadurch gekennzeichnet, dass**
- das Licht in einer Region des Laborprobenbehälters (10), die die Öffnung (12) bildet, aus dem Laborprobenbehälter (10) ausgekoppelt wird.

6. Verfahren nach einem der vorstehenden Ansprüche, **dadurch gekennzeichnet, dass**
- die gemessene Lichtleistung von Licht an der Messstelle (21) mit Hilfe eines Normalisierungswertes normalisiert wird, wobei der Normalisierungswert eine gemessene Lichtleistung im nicht abgedeckten Zustand des Laborprobenbehälters (10) ist, wobei der abgedeckte Zustand, der teilweise abgedeckte Zustand und/oder der nicht abgedeckte Zustand in Abhängigkeit von der normalisierten gemessenen Lichtleistung erkannt werden/wird.

7. Laborprobenverteilungssystem (5) zum Durchführen des Verfahrens nach einem der vorstehenden Ansprüche, umfassend
- eine lichtemittierende Einrichtung (24), die dafür ausgelegt ist, Licht in einen Laborprobenbehälter (10) an einem Längsende (11) gegenüber einer Öffnung (12) des Laborprobenbehälters (10) einzuleiten,
- eine Erfassungseinrichtung (20), die an einer Messstelle (21) positioniert ist und dafür ausgebildet ist, eine Lichtleistung von Licht an der Messstelle (21) zu messen, wobei die Messstelle (21) so gewählt wird, dass die gemessene Lichtleistung von der Lichtleistung des in den Laborprobenbehälter (10) eingeleiteten Lichts abhängt und von dem Abdeckungszustand abhängt, und
- eine Steuerungsvorrichtung (6), die dafür ausgelegt ist, einen abgedeckten Zustand, einen teilweise abgedeckten Zustand und/oder einen nicht abgedeckten Zustand des Laborprobenbehälters (10) in Abhängigkeit von der gemessenen Lichtleistung zu erkennen.

8. Laborprobenverteilungssystem (5) nach Anspruch 7, **dadurch gekennzeichnet, dass**
- die Steuerungsvorrichtung (6) dafür ausgebildet ist, das weitere Bearbeiten eines Laborprobenbehälters (10) zu beeinflussen, wenn ein nicht abgedeckter Zustand oder ein teilweise abgedeckter Zustand des Laborprobenbehälters (10) erkannt wird.

9. Laborprobenverteilungssystem (5) nach Anspruch 7 oder 8, ferner umfassend:
- eine Transportvorrichtung (7) zum Transportieren einer Vielzahl von Laborprobenbehältern (10), wobei die Transportvorrichtung (7) mehrere Trägerelemente (8) umfasst, die jeweils eine entsprechende Öffnung zur Aufnahme eines entsprechenden Laborprobenbehälters (10) aufweisen, wobei die lichtemittierende Einrichtung (24) an einer Position längsseits der Transportvorrichtung (7) angeordnet ist, um das Licht in einen Laborprobenbehälter (10) einzuleiten, der in einem Trägerelement (8) aufgenommen ist.

10. Laborprobenverteilungssystem (5) nach Anspruch 9, **dadurch gekennzeichnet, dass**
- die Transportvorrichtung (7) ein Förderband ist.

## Revendications

1. Procédé de détection d'un état de couverture d'un récipient d'échantillon de laboratoire (10), dans lequel le récipient d'échantillon de laboratoire (10) est au moins partiellement photoconducteur et dans lequel le récipient d'échantillon de laboratoire (10) a un orifice (12) qui peut être couvert par un couvercle (14) dédié, dans lequel le procédé comprend les étapes :
- injection de lumière dans le récipient d'échantillon de laboratoire (10),
- mesure d'une puissance optique de la lumière au niveau d'un emplacement de mesure (21), dans lequel l'emplacement de mesure (21) est choisi de sorte que la puissance optique mesurée dépend de la puissance optique de la lumière injectée dans le récipient d'échantillon de laboratoire (10) et dépend de l'état de couverture, et
- détection d'un état couvert, d'un état partiellement couvert et/ou d'un état non couvert du récipient d'échantillon de laboratoire (10) en fonction de la puissance optique mesurée,
**caractérisé en ce que**
- la lumière est injectée dans le récipient d'échantillon de laboratoire (10) au niveau d'une extrémité longitudinale (11) opposée à l'orifice (12).

2. Procédé selon la revendication 1, **caractérisé en ce que**
- la lumière est injectée dans le récipient d'échantillon de laboratoire (10) au niveau d'un support (16) maintenant le récipient d'échantillon de laboratoire (10).

3. Procédé selon l'une des revendications précédentes, **caractérisé en ce que**
- la lumière est injectée dans le récipient d'échantillon de laboratoire (10) en utilisant un élément de guidage d'ondes (22).

4. Procédé selon l'une des revendications précédentes, **caractérisé en ce que**
- la puissance optique est mesurée en utilisant un moyen de détection (20) positionné au niveau de l'emplacement de mesure (21) à côté de l'orifice (12), de sorte que le moyen de détection (20) est éclairé par la lumière qui a été injectée dans le récipient d'échantillon de laboratoire (10) et sort du récipient d'échantillon de laboratoire (10), si l'orifice (12) n'est pas couvert ou est partiellement couvert par le couvercle (14).

5. Procédé selon la revendication 4, **caractérisé en ce que**
- la lumière sort du récipient d'échantillon de laboratoire (10) dans une région du récipient d'échantillon de laboratoire (10) formant l'orifice (12).

6. Procédé selon l'une des revendications précédentes, **caractérisé en ce que**
- la puissance optique de la lumière mesurée au niveau de l'emplacement de mesure (21) est normalisée au moyen d'une valeur de normalisation, dans lequel la valeur de normalisation est une puissance optique mesurée dans l'état non couvert du récipient d'échantillon de laboratoire (10), dans lequel l'état couvert, l'état partiellement couvert et/ou l'état non couvert est détecté en fonction de la puissance optique mesurée normalisée.

7. Système de distribution d'échantillons de laboratoire (5) pour exécuter le procédé selon l'une des revendications précédentes, comprenant
- un moyen d'émission de lumière (24) qui est adapté pour injecter de la lumière dans un récipient d'échantillon de laboratoire (10) au niveau d'une extrémité longitudinale (11) opposée à un orifice (12) du récipient d'échantillon de laboratoire (10),
- un moyen de détection (20) positionné au niveau d'un emplacement de mesure (21) et qui est configuré pour mesurer une puissance optique de lumière au niveau de l'emplacement de mesure (21), dans lequel l'emplacement de mesure (21) est choisi de sorte que la puissance optique mesurée dépend de la puissance optique de la lumière injectée dans le récipient d'échantillon de laboratoire (10) et dépend de l'état de couverture, et
- un dispositif de commande (6) adapté pour détecter un état couvert, un état partiellement couvert et/ou un état non couvert du récipient d'échantillon de laboratoire (10) en fonction de la puissance optique mesurée.

8. Système de distribution d'échantillons de laboratoire (5) selon la revendication 7, **caractérisé en ce que**
- le dispositif de commande (6) est configuré pour influencer le traitement ultérieur d'un récipient d'échantillon de laboratoire (10), si un état non couvert ou un état partiellement couvert du récipient d'échantillon de laboratoire (10) est détecté.

9. Système de distribution d'échantillons de laboratoire (5) selon la revendication 7 ou 8, comprenant en outre :
- un dispositif de transport (7) pour transporter une pluralité de récipients d'échantillon de laboratoire (10), dans lequel le dispositif de transport (7) comprend un certain nombre d'éléments de support (8) ayant chacun une ouverture respective pour recevoir un récipient d'échantillon de laboratoire (10) respectif, dans lequel le moyen d'émission de lumière (24) est disposé au niveau d'une position le long du dispositif de transport (7) pour injecter la lumière dans un récipient d'échantillon de laboratoire (10) reçu dans un élément de support (8).

10. Système de distribution d'échantillons de laboratoire (5) selon la revendication 9, **caractérisé en ce que**
- le dispositif de transport (7) est une bande transporteuse.
